# EUROPÄISCHE PATENTSCHRIFT

(11) **EP 2 608 289 B1**
(45) Veröffentlichungstag und Bekanntmachung des Hinweises auf die Patenterteilung: **20.07.2016**
(21) Anmeldenummer: 12008362.1
(22) Anmeldetag: 15.12.2012
(51) Int. Cl.: H01M 2/10, H01M 2/20, H01M 10/04, H01M 10/0525, H01M 10/48

(54) **Auf dem Rücken tragbarer Akkupack**
Battery pack which can be worn on the back
Batterie portable sur le dos

(30) Priorität: 22.12.2011 DE 102011122058
(43) Veröffentlichungstag der Anmeldung: 26.06.2013
(73) Patentinhaber: Andreas Stihl AG & Co. KG, 71336 Waiblingen (DE)
(72) Erfinder: Roßkamp, Heiko, Dr., 73099 Adelberg (DE); Liebhard, Gernot, 71332 Waiblingen (DE); Gaul, Henrik, 73614 Schorndorf (DE); Reber, Volker, 74544 Michelbach/Bilz (DE); Kolb, Joachim, 71640 Ludwigsburg (DE)
(74) Vertreter: Wasmuth, Rolf

(56) Entgegenhaltungen:
- EP-A1- 1 069 631
- EP-A2- 2 224 512
- EP-A2- 2 317 585
- WO-A2-02/30631
- DE-U1-202010 012 151
- US-A1- 2008 050 645

## Beschreibung

Die Erfindung betrifft einen Akkupack für einen elektrischen Verbraucher, insbesondere für ein tragbares, elektrisches Arbeitsgerät nach dem Oberbegriff des Anspruchs 1.

Im privaten wie im professionellen Bereich finden immer häufiger mit Akkus betriebene Arbeitsgeräte Anwendungen. Leistungsfähige Akkus wie chemisch auf Lithium basierende Akkus haben eine hohe Energiedichte, so dass auch anspruchsvollere, längere Arbeiten mit elektrischen Arbeitsgeräten ausgeführt werden können. So sind Akkuheckenscheren, Akkumotorsägen und Akkufreischneider bekannt, die einen in das Gehäuse des Arbeitsgerätes eingeschobenen Akkupack aufweisen.

Sollen größere Arbeiten mit Freischneidern oder Heckenscheren ausgeführt werden, müssen zur Erzielung von langen Betriebszeiten größere Akkupacks verwendet werden, die überwiegend getrennt vom elektrischen Arbeitsgerät vom Benutzer getragen werden. Dabei verbindet ein Anschlusskabel den vom Benutzer getragenen Akkupack mit dem elektrischen Verbraucher im Arbeitsgerät. Derartige Akkupacks haben ein erhöhtes Gewicht und müssen daher in einem stabilen Gehäuse angeordnet werden. Stabile Gehäuse sind meist schwer und erhöhen das Gewicht des ohnehin schweren Akkupacks erheblich; leichtere Gehäuse sind jedoch anfällig gegen Beschädigungen, z. B. wenn der abgestellte Akkupack umfällt oder beim Abnehmen vom Rücken auf den Boden fällt.

Aus der DE 20 2010 012 151 U1 ist ein gattungsgemäßer Akkupack bekannt, dessen Gehäuse aus einem etwa L-förmigen Grundkörper mit einem Aufnahmeraum besteht, der durch einen Deckel zu verschließen ist. Die im Aufnahmeraum angeordneten Akkublocks weisen ein längliches Blockgehäuse auf, das allseits geschlossen ist und in dem die wiederaufladbaren Einzelzellen angeordnet sind. Die Akkublocks liegen auf Auflagern und werden durch Niederhalter am Deckel in ihrer Lage im Aufnahmeraum gesichert. Das Gehäuse muss aufgrund der Gewichtsbelastung durch die Akkupacks stabil und verwindungssteif ausgebildet sein.

Aus der EP 1 069 631 A1 ist ein an einem Gerätegehäuse eines elektrischen Arbeitsgerätes festzulegender Akkupack bekannt. In dem Gehäuse des Akkupacks sind zwei Zellpacks aus Einzelzellen vorgesehen, wobei die Einzelzellen an ihren Enden in Zellträgern gehalten sind. Über an den Zellträgern gehaltene Zellverbinder sind die Einzelzellen eines Zellpacks elektrisch miteinander verbunden. Im Gehäuse des Akkupacks sind schienenartige Führungen ausgebildet, in die beim schubladenartigen Einschieben der Rand eines Zellträgers geführt und gehalten ist. Dabei liegen die Zellverbinder des einen Zellpacks den Zellverbindern des anderen Zellpacks mit geringem Abstand gegenüber.

Der Erfindung liegt die Aufgabe zugrunde, einen Akkupack für einen elektrischen Verbraucher derart zu gestalten, dass ein leichtes, widerstandsfähiges Gehäuse für den Akkupack gebildet ist.

Die Aufgabe wird nach den Merkmalen des Anspruchs 1 gelöst.

Der Aufnahmeraum für die Einzelzellen des getrennt vom elektrischen Arbeitsgerät vom Benutzer getragenen Akkupacks ist gemäß der Erfindung durch Trennwände in Einzelräume unterteilt. In einem Einzelraum ist ein Zellpack aus Einzelzellen angeordnet, wobei jeder Zellpack eine selbstständige Baueinheit bildet, die in dem Einzelraum gehalten ist. Dabei sind die Einzelzellen eines Zellpacks durch Zellverbinder elektrisch und mechanisch miteinander verbunden. Die Trennwände verlaufen vorteilhaft etwa parallel zu den seitlichen Gehäusewänden und insbesondere etwa orthogonal zur Grundplatte.

Durch die Bildung von mechanisch voneinander getrennten Einzelräumen innerhalb des Gehäuses des Akkupacks wird eine Versteifung erzielt, die eine stabile mechanische Struktur des Gehäuses des Akkupacks bildet. Dadurch kann das Gehäuse aus einem leichten Material, z. B. Kunststoff oder dgl. gebildet werden, ohne dass die Festigkeit des Gehäuses reduziert ist.

Die Aufteilung in Einzelräume hat auch den Vorteil, dass ein gleiches Gehäuse für unterschiedlich konfigurierte Akkupacks verwendet werden kann. So können in einem Zellpack die maximale Anzahl von Einzelzellen verbaut sein, z. B. 15; es können aber auch Zellpacks mit weniger Einzelzellen bis hin zu nur einer Einzelzelle innerhalb eines Zellpacks konfiguriert werden. Da die Einzelräume mechanisch von den anderen Einzelräumen getrennt sind, kann das Gehäuse des Akkupacks auch mit nur zwei oder drei Zellpacks versehen werden, wenn z. B. geringere Leistungen benötigt werden. Durch die Aufteilung in Einzelräume für Zellpacks ist die Variabilität des Gehäuses und dessen Nutzen erhöht.

Vorteilhaft ist ein Zellpack in einem Einzelraum durch in seine Außenkontur einragende Eingriffselemente des Gehäuses gesichert. Der Zellpack kann sich in seinem Einzelraum nicht verschieben, sondern ist durch die Eingriffselemente in seiner Position im Einzelraum fixiert, so dass ein Zellpack mit etwa gleichem z. B. umlaufenden Abstand zu den Trennwänden ausgerichtet werden kann.

Die Trennwände im Gehäuse des Akkupacks sind durch eine gemeinsame Rippe gebildet, die sich von der einen Schmalseite des Gehäuses zu dessen gegenüberliegender Schmalseite erstrecken. Dabei ist zweckmäßig in Längsrichtung einer Trennwand eine elastische Verformungszone ausgebildet, die bei einwirkenden Kräften als Dämpfer und Absorber wirken. Die Verformungszone besteht etwa aus einem wellenförmigen oder S-förmigen Wandabschnitt, der insbesondere ein Eingriffselement des Gehäuses bilden kann; das Eingriffselement greift in eine in der Außenkontur ausgebildete Ausnehmung des Zellpacks ein und sichert dieses gegen Bewegung im Einzelraum. Die Aussparungen auf einer Längsseite des Zellpacks liegen zu den Aussparungen auf der anderen Längsseite des Zellpacks versetzt.

Die Trennwände der Einzelräume erstrecken sich etwa über die gesamte Höhe eines Zellpacks, so dass jeder Zellpack von den anderen Zellpacks mechanisch vollständig getrennt ist, was die Sicherheit des gesamten Akkupacks erhöht.

Die Einzelräume sind vorteilhaft in einem Grundkörper des Akkupacks, insbesondere auf der Rückenplatte des Akkupacks ausgebildet, wobei die Grundplatte des Gehäuses mit der Bodenplatte einen L-förmigen Grundkörper bildet, der den Aufnahmeraum des Akkupacks begrenzt. Dieser Aufnahmeraum ist durch einen Gehäusedeckel verschließbar.

Die im Akkupack zur Bildung der Einzelräume vorgesehenen Trennwände bestehen aus einem ersten auf der Grundplatte bzw. der Rückenplatte ausgebildeten Höhenabschnitt und einem zweiten, im Gehäusedeckel ausgebildeten Höhenabschnitt. Dadurch wird eine leichtere Zugänglichkeit der Zellpacks bei abgenommenem Gehäusedeckel erzielt.

Ein Zellpack ist durch am Boden eines Einzelraums vorgesehene Auflager im Einzelraum ausgerichtet gehalten, vorzugsweise mit etwa gleichem Abstand zu den Trennwänden des Einzelraums fixiert. Mit den Auflagern können Höhenunterschiede im Bodenbereich ausgeglichen und eine ausgerichtete Lage des Zellpacks erzielt werden. Vorteilhaft sind auch im Gehäusedeckel des Akkugehäuses Auflager entsprechend denen des Grundgehäuses vorgesehen, so dass ein Akkupack auch zwischen Auflagern gehalten, vorzugsweise spielfrei gehalten ist.

In Weiterbildung der Erfindung ist die von der einen Längsseite zur anderen Längsseite verlaufende Trennwand im Gehäuse des Akkupacks unterbrochen. Zweckmäßig ist die Trennwand auf der Höhe jedes Einzelraums unterbrochen, wobei durch die Unterbrechung eine Aussparung gebildet wird, die der Führung elektrischer Leitungen dient. Diese Aussparung kann - nach Verlegen der elektrischen Leitung - durch einen Schieber verschlossen werden, der gleichzeitig als Halteelement für Verdrahtungen dient.

Die Trennwand im Gehäuse des Akkupacks ist vorteilhaft über einen bogenförmigen, im Schnitt teilzylindrischen Anschlussabschnitt an die Schmalseiten des Gehäuses angebunden. Der zur Trennwand symmetrische, teilzylindrische Anschlussabschnitt dient, ähnlich wie die Verformungszone, als Dämpfer und Absorber für einwirkende Kräfte. Vorteilhaft sind im Rand des teilzylindrischen Anschlussabschnittes Aussparungen zur weiteren Führung elektrischer Kabel vorgesehen.

In Weiterbildung der Erfindung ist in dem Gehäuse des Akkupacks ein elektrischer Anschlusskasten vorgesehen, der zweckmäßig an dem der Bodenplatte gegenüberliegenden Ende des Gehäuses angeordnet ist. Dadurch ist der Anschlusskasten im oberen Endbereich der Grundplatte (Rückenplatte) vorgesehen und der im Bodenbereich eingesparte Raum kann mit Zellpacks besetzt werden. Dadurch sinkt der Schwerpunkt des Akkupacks in Richtung zum Boden des Gehäuses, was für einen Benutzer ergonomisch vorteilhaft ist.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: eine schematische Darstellung eines elektrischen Arbeitsgerätes mit einem rückentragbaren Akkupack,
- Fig. 2: eine Ansicht auf eine Sichtfläche des Akkupacks,
- Fig. 3: eine perspektivische Ansicht auf den Akkupack nach Fig. 2,
- Fig. 4: eine Teilexplosionsdarstellung des Akkupacks nach Fig. 2,
- Fig. 5: in perspektivischer Darstellung eine Ansicht auf einen Zellpack,
- Fig. 6: eine Draufsicht auf den Zellpack nach Fig. 5,
- Fig. 7: eine perspektivische Ansicht des offenen Grundkörpers des Gehäuses des Akkupacks nach Fig. 2,
- Fig. 8: eine Seitenansicht auf den Grundkörper nach Fig. 7,
- Fig. 9: eine Draufsicht auf einen offenen Aufnahmeraum des Grundkörpers nach Fig. 7,
- Fig. 10: eine Draufsicht auf den Grundkörper nach Fig. 7 mit im Aufnahmeraum angeordneten Zellpacks,
- Fig. 11: eine perspektivische Darstellung des Grundkörpers nach Fig. 10,
- Fig. 12: in vergrößerter Darstellung die Einzelheit XII in Fig. 9,
- Fig. 13: die vergrößerte Einzelheit XIII in Fig. 12.

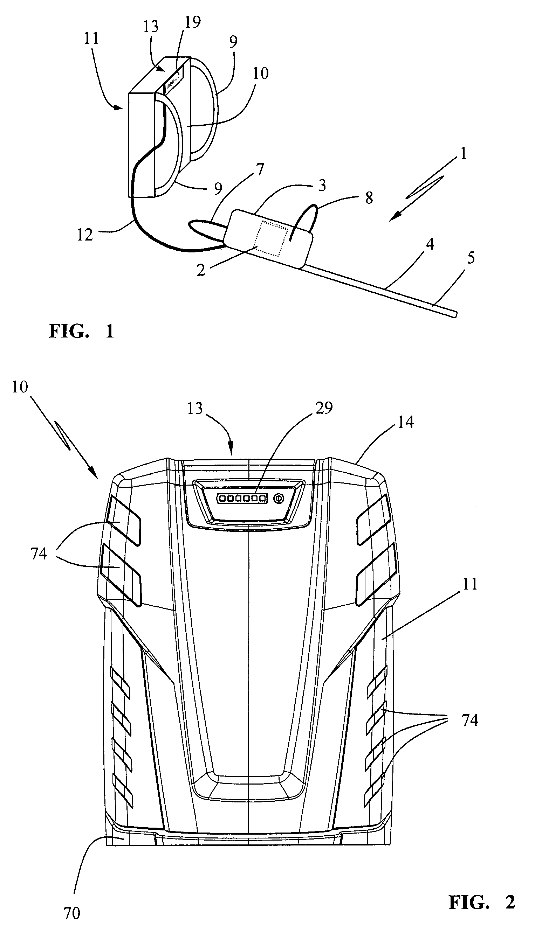

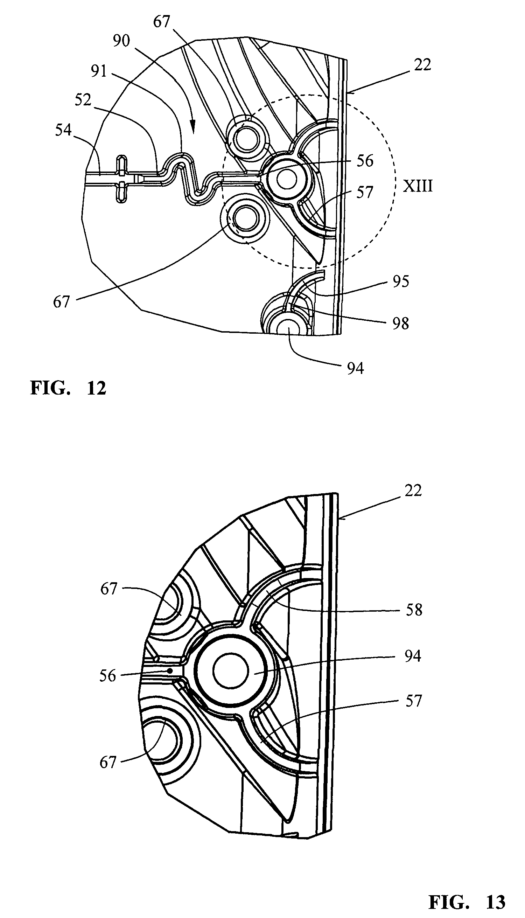

Der in den Figuren 2 bis 13 in Details dargestellte Akkupack 10 ist für ein elektrisches Arbeitsgerät 1 vorgesehen, wie es beispielhaft in Fig. 1 dargestellt ist. Im gezeigten Ausführungsbeispiel ist das Arbeitsgerät eine elektrische Heckenschere mit einem elektrischen Antriebsmotor 2, der einen elektrischen Verbraucher 3 bildet. Der elektrische Antriebsmotor 2 des dargestellten Arbeitsgerätes 1 ist an dem einen Ende eines Messerbalkens 4 angeordnet, das als Werkzeug zwei hin- und hergehende Messer 5 aufweist. Das Gehäuse des Arbeitsgerätes 1 weist einen Griff als vorderen Handgriff 8 und einen weiteren Griff als hinteren Handgriff 7 auf, über die ein Benutzer das elektrische Arbeitsgerät 1 hält und führt. Zur Energieversorgung des elektrischen Verbrauchers 3 ist der Akkupack 10 vorgesehen, der als rückentragbare Baueinheit 11 ausgebildet ist und mit Tragriemen 9 auf dem Rücken eines Benutzers festgelegt wird. Der Akkupack 10 ist über ein elektrisches Anschlusskabel 12 mit dem elektrischen Verbraucher 3 des Arbeitsgerätes 1 verbunden, wobei das Anschlusskabel 12 auf der Seite des Akkupacks 10 mit einem Anschlussstecker 27 in einem Anschlusskasten 13 angeschlossen ist.

Als Arbeitsgerät kann anstelle einer Heckenschere auch ein Blasgerät, eine Motorkettensäge, ein Freischneider, ein Hochentaster oder dgl. Gerät an den Akkupack 10 angeschlossen werden.

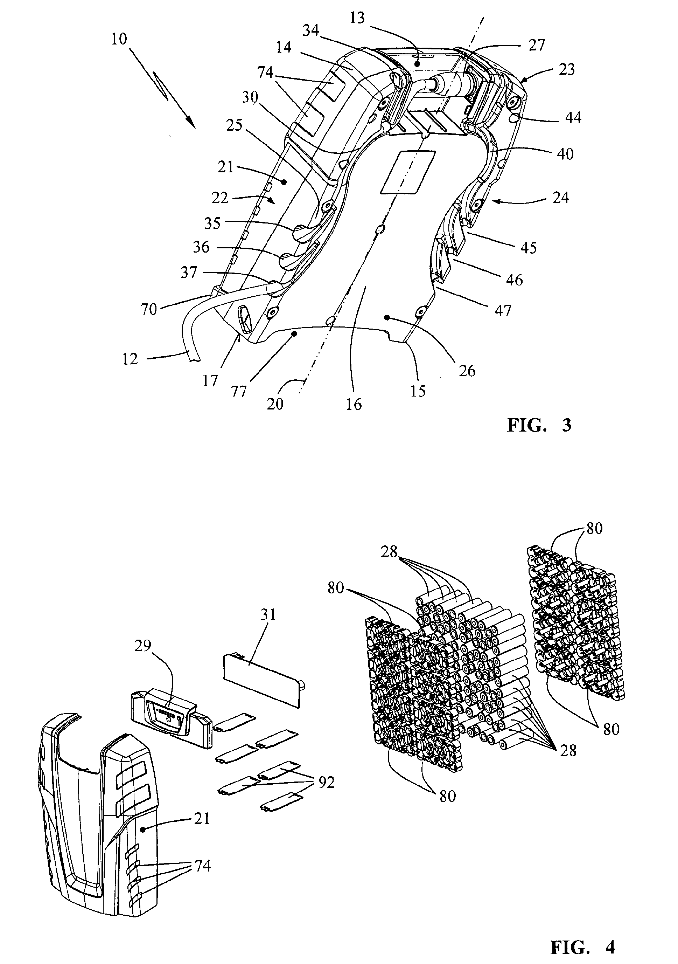

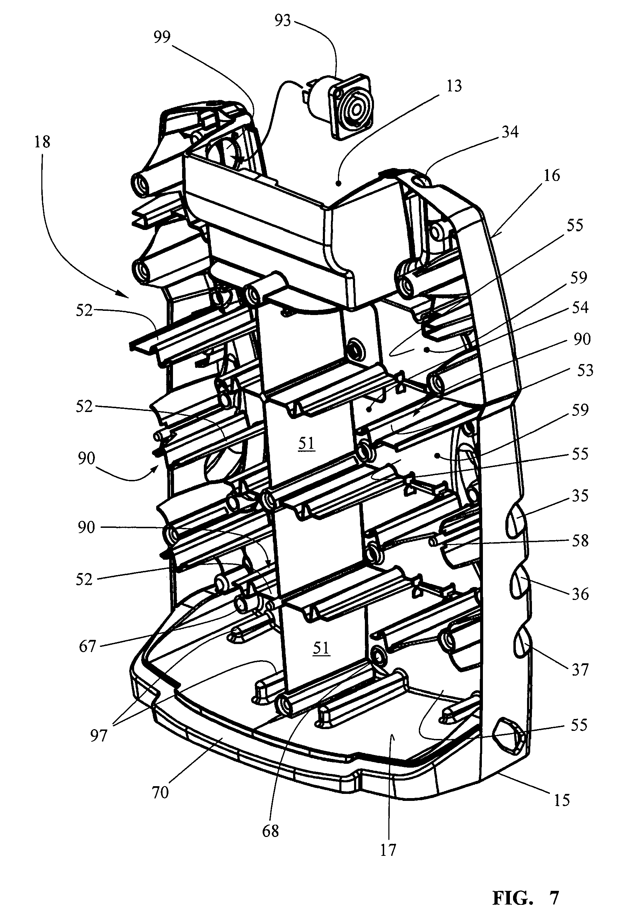

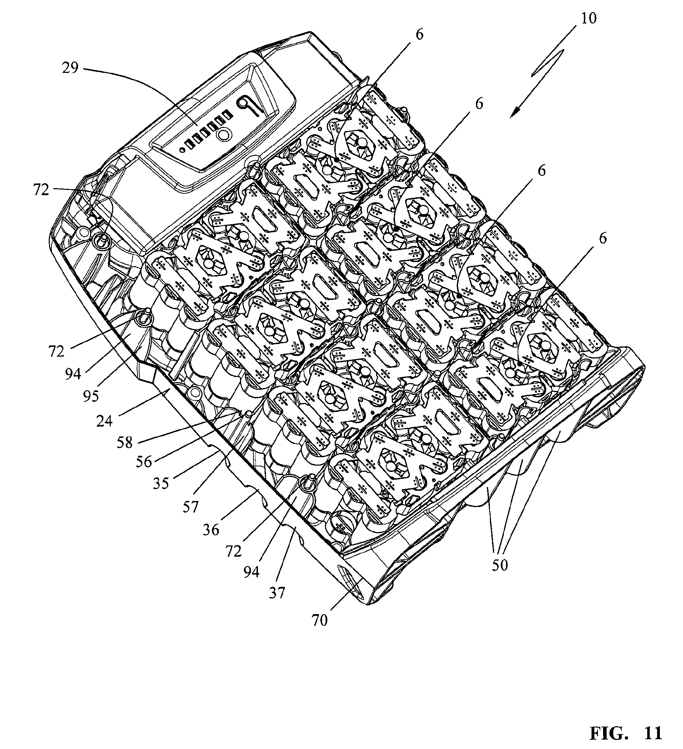

Das Gehäuse 14 des Akkupacks 10 ist als vom elektrischen Verbraucher 3 getrennte Baueinheit 11 (Fig. 1) ausgeführt und besteht im Wesentlichen aus einer Grundplatte, die als eine dem Rücken eines Benutzers zugewandte Rückenplatte 16 (Fig. 3) ausgebildet ist. Die Rückenplatte 16 liegt etwa rechtwinklig zu einem Boden 17 (Fig. 7), so dass der Grundkörper 15 des Gehäuses 14 etwa L-Form hat. Der Boden 17 ist auf seiner Gehäuseaußenseite mit einer Verrippung 50 (Fig. 11) versehen, so dass der Boden 17 selbst als Formkörper einen stabilen Standfuß 70 für den Akkupack 10 bildet, mit dem er auf dem Boden sicher abgestellt werden kann.

Die Rückenplatte 16 ist, wie Fig. 3 zeigt, leicht zum Gehäuseinnenraum gewölbt und bildet eine anatomisch angepasste Auflage für den Rücken eines Benutzers. Zum Benutzer hin ist die Rückenplatte 16 vollständig geschlossen, weist also keine Durchbrüche oder Öffnungen für Kühlluft oder dgl. auf.

Die Rückenplatte 16 hat eine etwa rechteckförmige Grundform, deren Längsmittelachse 20 senkrecht zum Boden 17 liegt und eine vertikale Hochachse bildet.

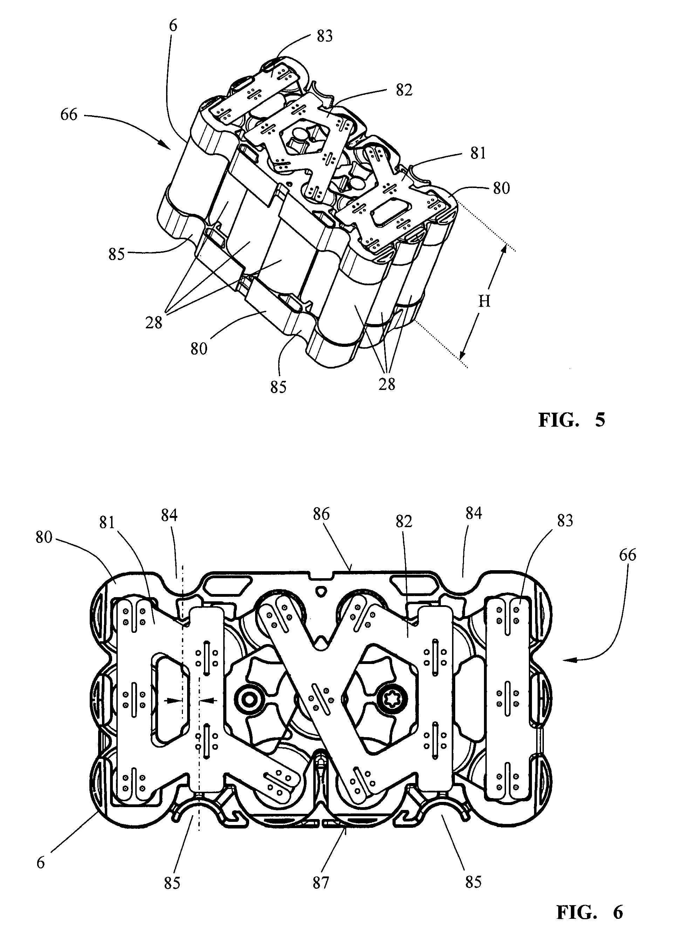

Wie Fig. 4 zeigt, besteht der Akkupack 10 aus einer Vielzahl von Einzelzellen 28, die - vgl. die Figuren 5 und 6 - zu quaderförmigen Zellpacks 6 konfektioniert werden.

Im Ausführungsbeispiel besteht ein Zellpack 6 grundsätzlich aus fünfzehn Einzelzellen 28, die über Zellverbinder 81, 82 und 83 elektrisch miteinander verbunden sind. Innerhalb eines Zellpacks 6 können die Einzelzellen 28 in Parallelschaltung und/oder Reihenschaltung miteinander verschaltet sein.

Zur Bildung eines Zellpacks 6 ist minimal eine Einzelzelle 28 notwendig; die maximale Zellzahl in der gezeigten Anordnung gemäß den Figuren 5 und 6 ist fünfzehn.

Wie den Figuren 5 und 6 entnommen werden kann, sind die Einzelzellen 28 an ihren Enden in Zellträgern 80 gehalten, die die Einzelzellen 28 relativ zueinander mechanisch fixieren. Nach Anordnung der Zellverbinder 81, 82 und 83 ergibt sich eine händelbare, selbstständige Baueinheit 66.

Jeder Zellpack 6 hat auf seiner Längsseite 86, 87 eine halbzylindrische Aussparung 84, 85, wobei die Aussparung 84 auf der einen Längsseite 86 des Zellpacks 6 zu den Aussparungen 85 auf der anderen Längsseite 87 des Zellpacks 6 versetzt liegen.

Die sich parallel zur Längsmittelachse 20 erstreckenden Hochseiten 22 und 24 bilden erste Schmalseiten des Gehäuses 14; die Hochseiten 22 und 24 sind an ihren Enden einerseits über den Boden 17 und andererseits über eine obere Schmalseite 23 miteinander verbunden. Zwischen der Rückenplatte 16 und den Schmalseiten (Hochseiten 22, 24, obere Schmalseite 23 und Boden 17) ist ein erster Rand 25 des Gehäuses 14 ausgebildet, der nachfolgend auch als Gehäuserand bezeichnet ist.

Um dem Benutzer eine frei wählbare, ergonomisch geeignete Kabelführung zu ermöglichen, sind in einer Gehäusewand des Gehäuses 14, im Ausführungsbeispiel in der Rückenplatte 16, Kabelkanäle 30, 40 (Fig. 3) ausgebildet, die vorteilhaft als offene, U-förmige Nuten gestaltet sind. Die Kabelkanäle 30, 40 sind dabei so verlegt, dass sie im Wesentlichen vollständig in der Rückenplatte 16 versenkt liegen, also in einem Bauraum zwischen der Außenfläche 26 der Rückenplatte 16 und den im Gehäuse 14 angeordneten Zellpacks 6. Jede U-förmige Nut ist im Wesentlichen über ihre gesamte Länge zu der Außenfläche 26 der Rückenplatte 16 offen ausgebildet, so dass ein Anschlusskabel 12 von der Außenfläche 26 aus einfach in den Kabelkanal 30, 40 eingelegt werden kann.

Ein Kabelkanal 30, 40 mündet im Rand 25 des Gehäuses 14 als Kabelaustritt 34 bis 37 bzw. 44 bis 47, wobei in Umfangsrichtung des Gehäuserandes 25 mehrere Kabelaustritte 34 bis 37 und 44 bis 47 vorgesehen sind. Jeder Kabelkanal 30, 40 verläuft aus dem Anschlusskasten 13 bis zum jeweiligen Kabelaustritt in der Rückenplatte 16 versenkt. Die Anordnung ist dabei so vorgesehen, dass auf beiden Seiten der vertikalen Längsmittelachse 20 Kabelaustritte 34 bis 37 bzw. 44 bis 47 vorgesehen sind.

Der Anschlusskasten 13 ist - vgl. Fig. 1 - durch einen Deckel 19 verschlossen und nimmt den Anschlussstecker 27 des Anschlusskabels 12 vollständig auf. Im Anschlusskasten 13 kann ferner eine zur Überwachung oder zur Kapazitätsanzeige des Akkupacks 10 vorgesehene Elektronik 31 (Fig. 4) angeordnet sein. Eine Überwachungselektronik ist insbesondere dann zweckmäßig, wenn der Akkupack 10 aus Lithium-Ionen-Zellen oder dgl. chemisch auf Lithium basierenden Einzelzellen 28 besteht. Um den Ladezustand des Akkupacks 10 anzuzeigen, ist in dem Gehäusedeckel 21 eine balkenförmige Ladezustandsanzeige 29 vorgesehen, die auf Höhe des Anschlusskastens 13 liegt. Auf diese Weise kann die entsprechende Elektronik 31 nahe der Ladezustandsanzeige 29 im Anschlusskasten 13 angeordnet werden. Die Anzeige kann auch als Display, z. b. LCD-Display ausgebildet sein, aus einzelnen optischen Anzeigen, wie z. B. LED's aufgebaut sein oder auch eine akustische Anzeige umfassen, um akustisch zu warnen, wenn z. B. die Restkapazität des Akkupacks einen vorgegebenen Schwellwert unterschreitet.

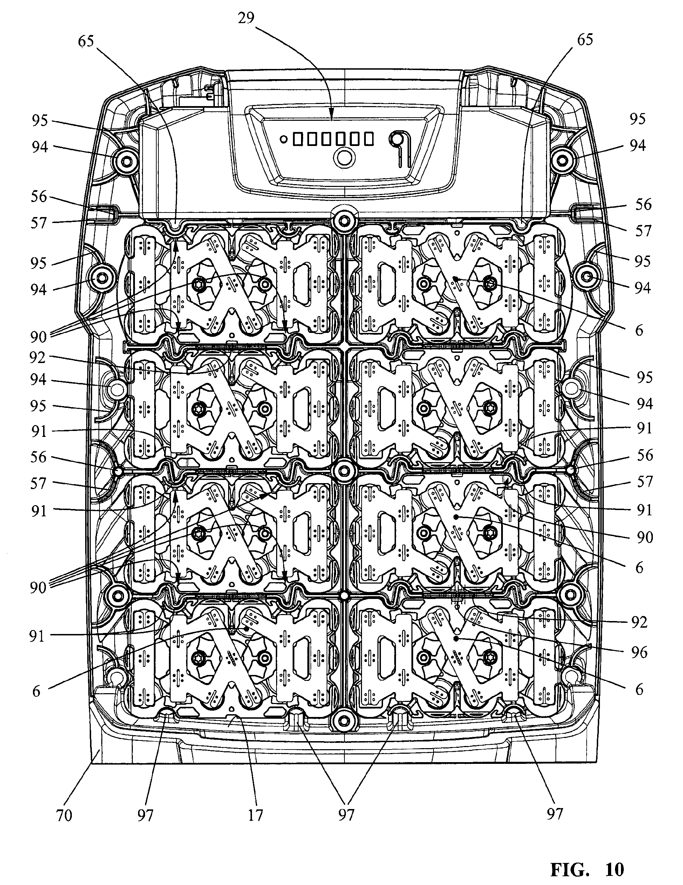

Zwischen dem Gehäusedeckel 21 und dem L-förmigen Grundkörper 15 ist ein Aufnahmeraum 18 ausgebildet, der der Aufnahme von Zellpacks 6 dient. In den Figuren 7 bis 9 ist dargestellt, wie der Aufnahmeraum 18 durch etwa parallel zu den Hochseiten 22, 24 bzw. der oberen Schmalseite 23 und dem Boden 17 verlaufende Trennwände 51, 52 in Einzelräume 55 aufgeteilt ist. Im gezeigten Ausführungsbeispiel ist der Aufnahmeraum 18 durch eine vertikale Trennwand 51 mittig geteilt, wozu die Trennwand 51 etwa auf Höhe der Längsmittelachse 20 der Rückenplatte 16 verläuft. Durch orthogonal zur Grundplatte liegende Trennwände 52 werden die beiden Hälften des Aufnahmeraums 18 im Grundkörper 15 in jeweils vier Einzelräume 55 unterteilt. Im gezeigten Ausführungsbeispiel ist die Unterteilung des Aufnahmeraums 18 derart vorgesehen, dass die Einzelräume 55 gleich groß sind und jeweils zur Aufnahme eines Zellpacks (Fig. 10, 11) gleicher Abmessung dienen.

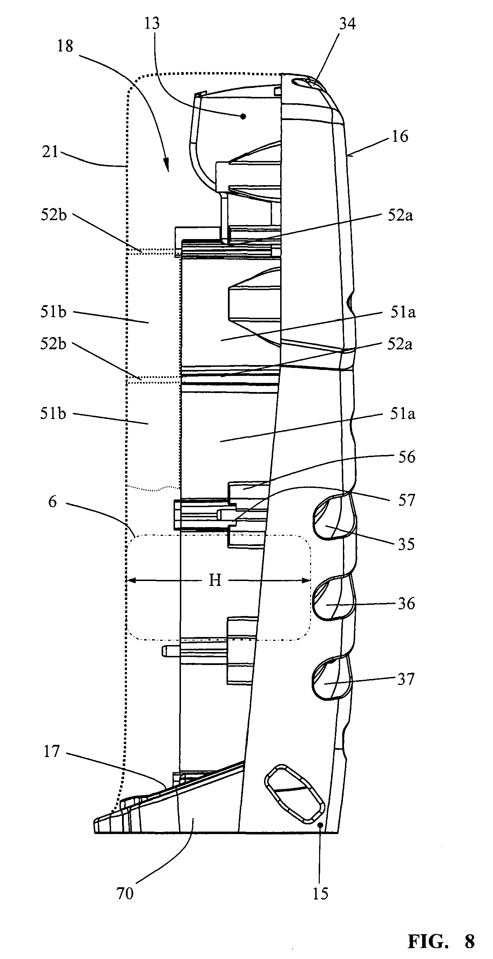

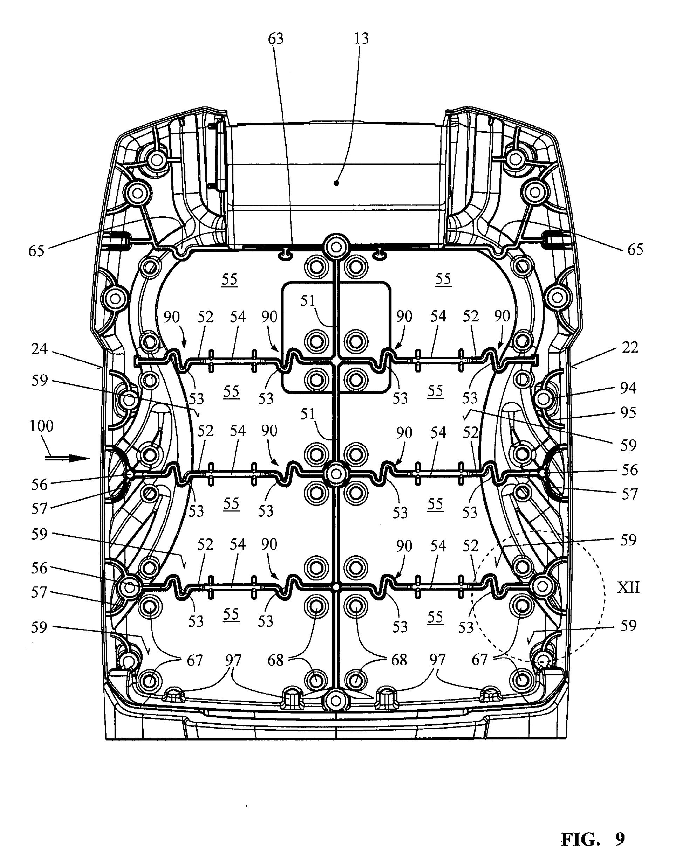

Wie in Fig. 8 dargestellt, setzt sich eine Trennwand 51 aus einem ersten, auf der Grundplatte (Rückenplatte 16) ausgebildeten Höhenabschnitt 51 a und einem zweiten, im Gehäusedeckel 21 ausgebildeten Höhenabschnitt 51b zusammen. Entsprechend setzt sich eine horizontale Trennwand 52 aus einem an der Rückenplatte 16 angebundenen Höhenabschnitt 52a und einem an dem Gehäusedeckel 21 angebundenen Höhenabschnitt 52b zusammen. Somit erstrecken sich die Trennwände 51 und 52 jeweils im Wesentlichen über die gesamte Höhe H eines Zellblocks 6 (Fig. 8). Wie den Figuren 7 und 9 zu entnehmen, ist der Aufnahmeraum in acht Einzelräume 55 aufgeteilt, wobei auf dem Boden 59 jedes Einzelraums Auflager 67, 68 für den Zellblock 6 vorgesehen sind. Die Auflager sind, wie in Fig. 7 zu erkennen, in der Höhe unterschiedlich gestaltet; dadurch kann, trotz der gewölbten Rückenplatte 16 und des daher gewölbten Bodens 59, für den Zellblock 6 eine ebene Auflage in einem Einzelraum 55 gewährleistet werden. Die Auflager 67, die nahe den Hochseiten 22 und 24 liegen, haben eine größere Höhe zum Ausgleich der Wölbung als die nahe der mittleren, vertikalen Trennwand 51 vorgesehenen Auflager 68.

Die Trennwände 51 und 52 sind als Rippen ausgebildet und erstrecken sich von der einen Schmalseite des Gehäuses 14 zu dessen gegenüberliegenden Schmalseite. Die vertikale Trennwand 51 erstreckt sich vom Boden 17 des L-förmigen Grundkörpers 15 bis zum Boden 63 des Anschlusskastens 13; die Trennwand 51 wirkt so als versteifende, vertikale Strebe.

Entsprechend verbinden die Trennwände 52 die eine Hochseite 22 des Gehäuses 14 mit dessen gegenüberliegender Hochseite 24. Im Kreuzungsbereich mit der Trennwand 51 sind die Trennwände 52 einteilig mit dieser gestaltet und bilden so ein Versteifungskreuz für das Gehäuse 14 des Akkupacks 10.

Um die auf das Gehäuse 14 wirkenden Kräfte zerstörungsfrei aufnehmen und weiterleiten zu können, ist vorgesehen, dass in Längsrichtung einer Trennwand, im Ausführungsbeispiel der Trennwand 52, eine elastische Verformungszone 90 ausgebildet ist, die bei Einwirken einer Kraft 100 (Fig. 9) elastisch nachgibt. Im gezeigten Ausführungsbeispiel besteht die Verformungszone 90 der Trennwand aus einem wellenförmigen, etwa S-förmigen Wandabschnitt 53. Wie die Figuren 7 und 9 zeigen, erstreckt sich der wellenförmige Wandabschnitt 53 über die gesamte Höhe der Trennwand 52, ist also sowohl im Höhenabschnitt 52a des Grundkörpers als auch im Höhenabschnitt 52b des Gehäusedeckels 21 ausgebildet. In Draufsicht entspricht der Wandabschnitt 53 etwa einer Vollwelle, z. B. einer Sinuswelle bzw. ist als S-Form gestaltet.

Um eine z. B. auf die schmale Hochseite 24 einwirkende Kraft 100 nicht über die horizontale Trennwand 52 bis zur schmalen Hochseite 22 durchzuleiten, ist vorgesehen, die Trennwand zwischen ihren Enden 56 zu unterbrechen. Im gezeigten Ausführungsbeispiel ist die Trennwand 52 auf der Höhe jedes Einzelraums 55 unterbrochen, z. B. mit einer Aussparung 54 versehen.

Auch die Aussparung 54 erstreckt sich über beide Höhenabschnitte 52a und 52b, ist also zum Teil im Trennwandabschnitt des Grundkörpers 15 und zum Teil im Trennwandabschnitt des Gehäusedeckels 21 vorgesehen.

Die Aussparungen 54 können durch Schieber 92 verschlossen werden, damit alle Einzelräume voneinander mechanisch getrennt sind. Die Aussparungen 54 können zur Führung elektrischer Leitungen genutzt werden, um dann - sind die elektrischen Leitungen verlegt - die Schieber 92 in die Aussparungen einzusetzen. Die Schieber 92 können so ausgebildet sein, dass sie die elektrische Verdrahtung 96 halten (Fig. 10).

Um zur Erzielung einer inneren Flexibilität die Anordnung weiter elastisch zu gestalten, ist vorgesehen, die Enden 56 einer Trennwand 52 nicht unmittelbar an die Hochseiten 22 und 24 anzuschließen, sondern über einen Anschlussabschnitt 57 an die Seitenwände des Gehäuses 14 anzubinden, wobei der Anschlussabschnitt 57 elastisch gestaltet ist. Im gezeigten Ausführungsbeispiel ist der Anschlussabschnitt im Schnitt bogenförmig gestaltet, insbesondere teilzylindrisch, wie in Fig. 9 sowie 12 und 13 dargestellt. Das Ende 56 der Trennwand ist etwa mittig an den Anschlussabschnitt 57 angebunden; der Anschlussabschnitt 57 ist symmetrisch zur Trennwand ausgebildet.

Vorteilhaft sind auch die benachbart zu den Hochseiten 22 und 24 innerhalb des Gehäuses 14 liegenden Schraubdome 94 über elastische Anschlussabschnitte 95 an die Seitenwände des Gehäuses 14 angebunden, wobei eine symmetrische Ausbildung vorteilhaft ist.

Um im Bereich der Hochseiten in einfacher Weise elektrische Kabel zu führen, sind in den Anschlussabschnitten 57 Aussparungen 58 und in den Anschlussabschnitten 95 Aussparungen 98 ausgebildet.

In die so gestalteten Einzelräume 55 werden die Zellpacks 6 eingesetzt, wie die Figuren 10 und 11 zeigen. Vorteilhaft ragen die wellenförmigen Abschnitte 91 der Verformungszone 90 in die Einzelräume 55 ein, wobei sie beim Einsetzen eines Zellpacks 6 in den Aussparungen 84 und 85 des Zellpacks 6 zu liegen kommen. Dadurch ist jeder Zellpack 6 einerseits räumlich in dem Einzelraum 55 von den anderen Zellpacks 6 getrennt aufgenommen und durch die Eingriffselemente bildenden wellenförmigen Abschnitte 91 in ihrer Lage im Einzelraum 55 gesichert. Um auch in den an die Böden 17 und 63 angrenzenden Einzelräumen eine auf beiden Seiten wirksame Fixierung des Zellpacks 6 zu gewährleisten, sind im Boden 17 wie im Boden 63 Sicken 97 bzw. 65 ausgebildet, die in die Einzelräume entsprechend den wellenförmigen Abschnitten 91 als Eingriffselemente einragen. Ein Zellpack 6 ist so in einem Einzelraum 55 bewegungssicher fixiert, wobei zwischen dem Zellpack 6 und den Wänden des Einzelraums 55 ein Abstand, insbesondere ein umlaufender Abstand vorgesehen sein kann.

Um den Gehäusedeckel 21 einerseits leicht auszuführen und andererseits aber eine ausreichende Stabilität zu gewährleisten, ist vorgesehen, im Bereich der Schraubdome zum Eingriff der Befestigungsschrauben 72 Aufdickungen 74 auszubilden. Diese Aufdickungen wirken als Versteifungen und sind - wie Fig. 2 zeigt - etwa rechteckförmig gestaltet und zugleich als Designelemente genutzt. Die Aufdickungen 74 liegen jeweils im Bereich der Schraubdome 94.

Der im Akkupack vorgesehene Anschlusskasten 13 ist einteilig mit dem Gehäuse 14 ausgebildet. Der Anschlusskasten 13 liegt gegenüber dem Boden 17, also am anderen Ende des Gehäuses 14, so dass die Zellpacks 6 unmittelbar im Bereich des Bodens 17 liegen. Dadurch kann ein niedriger Schwerpunkt des gesamten Akkupacks 10 gewährleistet werden.

Um für einen Benutzer das Tragen des Akkupacks 10 angenehmer zu gestalten, ist vorgesehen, im Fußbereich der Rückenplatte 16 einen Einzug 77 auszubilden. Der Einzug 77 erstreckt sich im Wesentlichen über die Höhe der Verrippung 50 des als Standfuß 70 ausgebildeten Bodens 17.

## Patentansprüche

1. Akkupack für einen elektrischen Verbraucher (3), insbesondere für ein tragbares, elektrisches Arbeitsgerät, wobei der Verbraucher (3) über ein Anschlusskabel (12) mit dem Akkupack (10) verbunden ist, und der Akkupack (10) mit einem Gehäuse (14) ausgebildet ist, das als vom elektrischen Verbraucher (3) getrennte Baueinheit (11) ausgeführt ist, und das Gehäuse (14) einen inneren Aufnahmeraum (18) für eine Vielzahl von Zellpacks (6) aus einer vorgegebenen Anzahl von wiederaufladbaren Einzelzellen (28) aufweist, wobei die Einzelzellen (28) eines Zellpacks (6) durch Zellverbinder (81, 82, 83) elektrisch miteinander verbunden sind und über das Anschlusskabel (12) den Verbraucher (3) speisen, wobei der Aufnahmeraum (18) des Gehäuses (14) durch Trennwände (51, 52) in Einzelräume (55) unterteilt ist, und in einem Einzelraum (55) ein Zellpack (6) als selbstständige Baueinheit (66) angeordnet ist, die in dem Einzelraum (55) gehalten ist, wobei die Trennwände (51, 52) im Gehäuse (14) durch Rippen gebildet sind, die sich von der einen Schmalseite (22, 24; 17, 23) des Gehäuses (14) zu dessen gegenüberliegender Schmalseite (24, 22; 23, 17) erstrecken,
**dadurch gekennzeichnet, dass** in Längsrichtung einer Trennwand (51, 52) eine elastische Verformungszone (90) ausgebildet ist, und die Verformungszone (90) aus einem wellenförmigen bis S-förmigen Wandabschnitt (53) besteht, und ein wellenförmiger Abschnitt (91) der Verformungszone (90) ein Eingriffselement des Gehäuses (14) bildet, welches in eine in der Außenkontur des Zellpacks (6) ausgebildete Aussparung (84, 85) eingreift, und die Aussparungen (84) auf einer Längsseite (86) des Zellpacks zu den Aussparungen (85) auf der anderen Längsseite (87) des Zellpacks (6) versetzt liegen.

2. Akkupack nach Anspruch 1,
**dadurch gekennzeichnet, dass** sich die Trennwände (51, 52) der Einzelräume (55) über etwa die gesamte Höhe (H) eines Zellpacks (6) erstrecken.

3. Akkupack nach Anspruch 1 oder 2,
**dadurch gekennzeichnet, dass** die Einzelräume (55) in einem Grundkörper (15) des Gehäuses (14) des Akkupacks (10) ausgebildet sind.

4. Akkupack nach Anspruch 3,
**dadurch gekennzeichnet, dass** die Einzelräume (55) auf einer Rückenplatte (16) des Akkupacks (10) ausgebildet sind.

5. Akkupack nach Anspruch 3 oder 4,
**dadurch gekennzeichnet, dass** die Grundplatte des Gehäuses (14) mit einem Boden (17) den L-förmigen Grundkörper (15) des Gehäuses (14) bildet, der den Aufnahmeraum (18) begrenzt, wobei der Aufnahmeraum (18) durch einen Gehäusedeckel (21) verschließbar ist.

6. Akkupack nach Anspruch 5,
**dadurch gekennzeichnet, dass** eine Trennwand (51, 52) aus einem ersten, auf der Grundplatte ausgebildeten Höhenabschnitt (51a, 52a) und einem zweiten, im Gehäusedeckel (21) ausgebildeten Höhenabschnitt (51 b, 52b) zusammengesetzt ist.

7. Akkupack nach einem der Ansprüche 1 bis 6,
**dadurch gekennzeichnet, dass** ein Zellpack (6) durch am Boden (59) eines Einzelraums (55) vorgesehene Auflager (67, 68) im Einzelraum (55) ausgerichtet gehalten ist, vorzugsweise mit etwa gleichem Abstand zu den Trennwänden (51, 52) des Einzelraums (55) ausgerichtet liegt.

8. Akkupack nach einem der Ansprüche 1 bis 7,
**dadurch gekennzeichnet, dass** die im Gehäuse (14) des Akkupacks (10) von der einen Hochseite (22, 24) zur anderen Hochseite (24, 22) verlaufende Trennwand (51, 52) unterbrochen ist.

9. Akkupack nach Anspruch 8,
**dadurch gekennzeichnet, dass** die Trennwand (51, 52) auf der Höhe jedes Einzelraums (55) unterbrochen ist und die Unterbrechung durch eine Aussparung (54) gebildet ist.

10. Akkupack nach Anspruch 9,
**dadurch gekennzeichnet, dass** die Aussparung (54) durch einen Schieber (92) verschließbar ist, der zwischen den Zellpacks (6) verlaufende Verdrahtungen (96) hält.

11. Akkupack nach einem der Ansprüche 1 bis 10,
**dadurch gekennzeichnet, dass** die Trennwand (51, 52) über einen bogenförmigen, im Schnitt teilzylindrischen Anschlussabschnitt (57) an die Schmalseite (22, 24) des Gehäuses (14) angebunden ist und im Rand des teilzylindrischen Anschlussabschnitts (57) Aussparungen (58) zur Führung von Kabeln vorgesehen sind.

12. Akkupack nach einem der Ansprüche 1 bis 11,
**dadurch gekennzeichnet, dass** auf der Außenseite des Gehäuses (14) als Versteifungen partielle Aufdickungen (74) ausgebildet sind.

13. Akkupack nach einem der Ansprüche 1 bis 12,
**dadurch gekennzeichnet, dass** in dem Gehäuse (14) des Akkupacks (10) ein elektrischer Anschlusskasten (13) vorgesehen ist, wobei das Gehäuse (14) einen Boden (17) aufweist und der elektrische Anschlusskasten (13) im oberen Endbereich der Grundplatte angeordnet ist.

14. Akkupack nach Anspruch 13,
**dadurch gekennzeichnet, dass** der Anschlusskasten (13) versenkt in einer Grundplatte des Gehäuses (14) des Akkupacks (10) unterhalb der oberen Schmalseite (23) des Gehäuses (14) vorgesehen ist.

15. Akkupack nach einem der Ansprüche 1 bis 14,
**dadurch gekennzeichnet, dass** die Zellpacks (6) durch Signalleitungen und/oder Energieleitungen untereinander verbunden sind.

## Claims

1. Battery pack for an electrical load (3), in particular for a portable electrical device, wherein the load (3) is connected via a connection cable (12) to the battery pack (10) and the battery pack (10) is formed with a housing (14) which is designed to be a separate unit (11) from the electrical load (3), and the housing (14) has an inner receiving space (18) for a plurality of cell packs (6) of a predefined number of rechargeable single cells (28), wherein the single cells (28) of a cell pack (6) are electrically connected to each other by cell connectors (81, 82, 83) and supply the load (3) via the connection cable (12), wherein the receiving space (18) of the housing (14) is subdivided by partition walls (51, 52) into individual spaces (55), and a cell pack (6) is arranged in an individual space (55) as an independent unit (66) which is held in the individual space (55), wherein the partition walls (51, 52) in the housing (14) are formed by ribs which extend from one narrow side (22, 24; 17, 23) of the housing (14) to the opposite narrow side (24, 22; 23, 17) thereof,
**characterised in that** an elastic deformation zone (90) is formed in the longitudinal direction of a partition wall (51, 52), and the deformation zone (90) consists of a wave-form to S-form wall portion (53), and a wave-form portion (91) of the deformation zone (90) forms an engagement element of the housing (14) which engages in a recess (84, 85) formed in the outer contour of the cell pack (6), and the recesses (84) are offset on one long side (86) of the cell pack with respect to the recesses (85) on the other long side (87) of the cell pack (6).

2. Battery pack according to claim 1,
**characterised in that** the partition walls (51, 52) of the individual spaces (55) extend approximately over the whole height (H) of a cell pack (6).

3. Battery pack according to claim 1 or 2,
**characterised in that** the individual spaces (55) are formed in a base body (15) of the housing (14) of the battery pack (10).

4. Battery pack according to claim 3,
**characterised in that** the individual spaces (55) are formed on a rear plate (16) of the battery pack (10).

5. Battery pack according to claim 3 or 4,
**characterised in that** the base plate of the housing (14) with a base (17) forms the L-shaped base body (15) of the housing (14) which defines the receiving space (18), wherein the receiving space (18) can be closed by a housing lid (21).

6. Battery pack according to claim 5,
**characterised in that** a partition wall (51, 52) is put together from a first height portion (51a, 52a) formed on the base plate and a second height portion (51b, 52b) formed in the housing lid (21).

7. Battery pack according to one of claims 1 to 6,
**characterised in that** a cell pack (6) is held in position, by bearings (67, 68) provided on the base (59) of an individual space (55), preferably at approximately the same distance from the partition walls (51, 52) of the individual space (55).

8. Battery pack according to one of claims 1 to 7,
**characterised in that** the partition wall (51, 52) extending in the housing (14) of the battery pack (10) from one high side (22, 24) to the other high side (24, 22) is interrupted.

9. Battery pack according to claim 8,
**characterised in that** the partition wall (51, 52) is interrupted at the height of each individual space (55) and the interruption is formed by a recess (54).

10. Battery pack according to claim 9,
**characterised in that** the recess (54) can be closed by a slide element (92) which holds wires (96) extending between the cell packs (6).

11. Battery pack according to one of claims 1 to 10,
**characterised in that** the partition wall (51, 52) is connected via an arc-form connecting portion (57) with a partially cylindrical cross-section to the narrow side (22, 24) of the housing (14), and recesses (58) are provided in the edge of the partially cylindrical connecting portion (57) to guide cables.

12. Battery pack according to one of claims 1 to 11,
**characterised in that** partial thickened areas (74) are formed on the outer side of the housing (14) as reinforcements.

13. Battery pack according to one of claims 1 to 12,
**characterised in that** an electrical connection box (13) is provided in the housing (14) of the battery pack (10), wherein the housing (14) has a base (17) and the electrical connection box (13) is arranged in the upper end region of the base plate.

14. Battery pack according to claim 13,
**characterised in that** the connection box (13) is provided lowered in a base plate of the housing (14) of the battery pack (10) below the upper narrow side (23) of the housing (14).

15. Battery pack according to one of claims 1 to 14,
**characterised in that** the cell packs (6) are interconnected by signal lines and / or power cables.

## Revendications

1. Batterie pour un consommateur électrique (3), en particulier pour un outil électrique portable sur le dos, étant précisé que le consommateur (3) est relié par un câble de raccordement (12) à la batterie (10) et que ladite batterie (10) est pourvue d'un boîtier (14) qui est conçu comme une unité de construction (11) séparée du consommateur électrique (3), et que le boîtier (14) présente un espace de logement intérieur (18) pour une multiplicité de blocs d'éléments (6) composés d'un nombre prédéfini d'éléments individuels rechargeables (28), étant précisé que les éléments individuels (28) d'un bloc (6) sont reliés électriquement entre eux par des barrettes de connexion d'éléments (81, 82, 83) et alimentent par l'intermédiaire du câble de raccordement (12) le consommateur (3), étant précisé que l'espace de logement (18) du boîtier (14) est divisé par des cloisons (51, 52) en espaces individuels (55) et que dans un espace individuel (55) est disposé un bloc d'éléments (6) sous la forme d'une unité de construction indépendante (66) qui est fixée dans ledit espace individuel (55), étant précisé que les cloisons (51, 52) du boîtier (14) sont formées par des nervures qui s'étendent d'un petit côté (22, 24 ; 17, 23) du boîtier (14) au petit côté opposé (24, 22 ; 23, 17) de celui-ci, **caractérisée en ce qu'**il est prévu, formée dans le sens longitudinal d'une cloison (51, 52), une zone de déformation élastique (90), et la zone de déformation (90) se compose d'une section de paroi (53) qui va d'une forme ondulée à une forme en S, et une section ondulée (91) de la zone de déformation (90) forme un élément d'emboîtement du boîtier (14) qui s'emboîte dans un creux (84, 85) formé dans le contour extérieur du bloc d'éléments (6), et les creux (84) sont décalés, sur un côté longitudinal (86) du bloc d'éléments, par rapport aux creux (85) de l'autre côté longitudinal (87) du bloc d'éléments (6).

2. Batterie selon la revendication 1,
**caractérisée en ce que** les cloisons (51, 52) des espaces individuels (55) s'étendent à peu près sur toute la hauteur (H) d'un bloc d'éléments (6).

3. Batterie selon la revendication 1 ou 2,
**caractérisée en ce que** les espaces individuels (55) sont formés dans un corps de base (15) du boîtier (14) de la batterie (10).

4. Batterie selon la revendication 3,
**caractérisée en ce que** les espaces individuels (55) sont formés sur une plaque arrière (16) de la batterie (10).

5. Batterie selon la revendication 3 ou 4,
**caractérisée en ce que** la plaque de base du boîtier (14) forme avec un fond (17) le corps de base en L (15) du boîtier, qui délimite l'espace de logement (18), étant précisé que ledit espace de logement (18) est apte à être fermé par un couvercle de boîtier (21).

6. Batterie selon la revendication 5,
**caractérisée en ce qu'**une cloison (51, 52) est composée d'une première section de hauteur (51a, 52a) formée sur la plaque de base, et d'une seconde section de hauteur (51b, 52b) formée dans le couvercle de boîtier (21).

7. Batterie selon l'une des revendications 1 à 6,
**caractérisée en ce qu'**un bloc d'éléments (6) est maintenu aligné dans un espace individuel (55) grâce à des supports (67, 68) prévus sur le fond (59) de l'espace individuel (55), et est de préférence aligné à peu près à égale distance des cloisons (51, 52) de l'espace individuel (55).

8. Batterie selon l'une des revendications 1 à 7,
**caractérisée en ce que** la cloison (51, 52) qui s'étend, dans le boîtier (14) de la batterie (10), d'un côté long (22, 24) à l'autre côté long (24, 22) est interrompue.

9. Batterie selon la revendication 8,
**caractérisée en ce que** la cloison (51, 52) est interrompue à la hauteur de chaque espace individuel (55), et l'interruption est formée par un creux (54).

10. Batterie selon la revendication 9,
**caractérisée en ce que** le creux (54) est apte à être fermé par un coulisseau (92) qui retient des câbles (96) s'étendant entre les blocs d'éléments (6).

11. Batterie selon l'une des revendications 1 à 10,
**caractérisée en ce que** la cloison (51, 52) est reliée par l'intermédiaire d'une section de raccordement (57) courbe, en partie cylindrique en coupe, au petit côté (22, 24) du boîtier (14), et il est prévu dans le bord de ladite section de raccordement en partie cylindrique (57) des creux (58) pour le guidage de câbles.

12. Batterie selon l'une des revendications 1 à 11,
**caractérisée en ce que** des épaississements partiels (74) sont formés, comme renforcements, sur le côté extérieur du boîtier (14).

13. Batterie selon l'une des revendications 1 à 12,
**caractérisée en ce qu'**il est prévu dans le boîtier (14) du bloc d'éléments (10) une boîte de raccordement électrique (13), étant précisé que le boîtier (14) comporte un fond (17) et que le boîtier de raccordement électrique (13) est disposé dans la zone d'extrémité supérieure de la plaque de base.

14. Batterie selon la revendication 13,
**caractérisée en ce que** le boîtier de raccordement (13) est encastré dans une plaque de base du boîtier (14) de la batterie (10) au-dessous du petit côté supérieur (23) du boîtier (14).

15. Batterie selon l'une des revendications 1 à 14,
**caractérisée en ce que** les blocs d'éléments (6) sont reliés entre eux par des lignes de signaux et/ou des lignes d'énergie.
